# EUROPEAN PATENT APPLICATION

(11) **EP 1 191 239 A1**
(43) Date of publication of application: **27.03.2002**
(21) Application number: 00120918.8
(22) Date of filing: 26.09.2000
(51) Int. Cl.: F16B 43/00, H04N 5/645

(54) **Distance washer**

(71) Applicant: SONY-WEGA PRODUKTIONS GmbH, 70327 Stuttgart (DE)
(72) Inventor: Neft, Hubert, c/o Advanced Tech. Center Stuttgart, 70327 Stuttgart (DE)
(74) Representative: Müller . Hoffmann & Partner Patentanwälte

(57) **Abstract**

A distance washer (19) comprises at least a first element (1) and a second element (12) arranged along a longitudinal axis (6) of said distance washer (19), wherein a position of said first element (1) relative to said second element (12) along said longitudinal axis (6) is changeable in order to vary a thickness of said distance washer (19) with respect to said longitudinal axis (6). The change of thickness of said distance washer (19) is useful for compensating tolerances between different parts to be fixed together.

## Description

The present invention relates to a distance washer. In particular, the present invention relates to a distance washer for fixing a cathode ray tube (CRT) to a supporting frame of a cabinet of a TV set.

A distance washer is generally used when fixing different parts together. A first purpose of a distance washer is to compensate gaps which may be present between the different parts, wherein the distance washer has a predetermined thickness in accordance with a gap to be filled. In case of an enlarged gap a plurarity of distance washers may also be used for fixation.

A further purpose of a distance washer is to increase a chucking length of a fixing means such as a screw or a bolt which is used for fixation. An increased chucking length leads to an elongation of the fixing means which provides a more reliable connection of the different parts to be fixed together.

Still further, a distance washer usually comprises a seat-engaging surface with an outer diameter larger than a diameter of the screw used together with the distance washer. When tightening the screw, the seat-engaging surface of the distance washer provides a decreased surface pressure at a location of a respective part where a force of the screw is lead into said respective part. Therewith a material damage at said location is prevented, making the fixation of the different parts still further reliable.

In the field of manufacturing TV sets securing means are usually used to mount a CRT to a cabinet wherein distances washers are generally used in connection therewith.

JP 0560141147 AA discloses how to obtain a correct position relation between a panel and a shadow mask of a CRT while preventing space loss. Therein, the shadow mask comprises a fixing portion including a long hole which is placed onto a mounting seat including a screw. The fixing portion is secured to the screw of the mounting seat by using a nut and a distance washer.

US 4,467,242 discloses a specially-designed washer-like element with a frusto-conically-shaped stud engaging portion to fix a colour selection electrode within a CRT.

It is an object underlying the present invention to provide a distance washer by which a tolerance between two parts to be fixed together can be easily compensated.

This object is achieved by a distance washer according to claim 1. Preferred embodiments are defined in the dependent claims 2 to 13.

The distance washer according to the present invention comprises at least a first element and a second element arranged along a longitudinal axis of said distance washer, wherein a position of said first element relative to said second element along said longitudinal axis is changeable in order to vary a thickness of said distance washer with respect to said longitudinal axis.

The distance washer according to the present invention is mainly used for mounting a cathode ray tube (CRT) on a supporting frame which is fixed to a cabinet of a TV set. Nevertheless, said distance washer can be used for any other purpose where different parts are fixed together.

The CRT comprises fixing elements, so-called CRT-ears, in order to fix the CRT to the supporting frame which generally comprises a plurality of screw bosses. When fixing the CRT to the supporting frame the distance washer according to the present invention is placed between a respective CRT-ear and a respective screw boss of the supporting frame.

Due to a relative movement of said first element relative to said second element along said longitudinal axis, the thickness of said distance washer can be increased such that a gap between the CRT-ear and the screw boss which might be present due to a tolerance of the CRT-ear and/or the supporting frame can be compensated. As for consequence, the supporting frame is not bending after the CRT is attached thereto.

Preferably, an engaging portion of said first element is engageable with a receiving portion of said second element such that said first element and said second element are merely movable in a direction such that the thickness of said distance washer increases.

Still preferably, said engaging portion is formed by a snap fit.

During mounting the CRT on the supporting frame, it is advantageous that a relative position of said first element with respect to said second element changes such that the thickness of the distance washer increases. Once the thickness of the distance washer has increased so as to fulfill a gap between a surface of the screw boss and the CRT-ear, a decrease of the thickness of the distance washer is advantageously prevented by means of the engaging portion engaging with the receiving portion. Hence, a reliable contact between the CRT-ear and the surface of the screw boss is provided without causing any bending of the supporting frame.

A main advantage of the distance washer according to the invention is given in that during a mounting of the CRT on the supporting frame or parts thereof tolerances of the CRT-ears leading to gaps are automatically compensated. Therewith, a bending of the supporting frame is prevented, wherein a distance between a CRT mask and a monitor mask of the TV set can be maintained constant. Further a force to tighten a securing screw for mounting the CRT on the supporting frame is advantageously always the same.

With respect to the engaging portion a material and a dimensioning are preferably chosen such that said engaging portion is movable out of an initial position, wherein a flexibility of said material tends the engaging portion to return back into its initial position. When coming into engagement with the receiving portion said engaging portion is moved out of its initial position wherein its flexibility assures a continuous engagement with said receiving portion.

Contact surfaces of both the engaging portion and the receiving portion are structured such that a small change of the position of said first element relative to the second element leads to a new definition of a relative position between the first and second element and therewith to a new definition of the thickness of the distance washer according to the present invention. To meet this requirement said engaging portion is preferably formed by a snap fit, wherein said receiving portion preferably comprises a surface formed like a saw tooth.

Still further preferably, said first element and/or said second element are rotatably arranged along said longitudinal axis, wherein said position of said first element relative to said second element along said longitudinal axis is changeable upon rotation of said first element and/or said second element.

In a still further preferable embodiment of the present invention, said first element and said second element comprise at least a first surface and a second surface, respectively, arranged along a circumferential part of said elements, wherein said at least one of said first and second surfaces of said first and second elements, respectively, is inclined with respect to a plane being orthogonal to said longitudinal axis, and wherein said first and second surfaces of said first and second elements, respectively, are in contact with each other. Still preferably, said at least one of said first and second surfaces is flat.

Still further preferably, said at least one surface is structured like a saw tooth such that said first element is merely rotatable in one direction relative to said second element in order to increase the thickness of said distance washer, wherein a decrease of the thickness in response to a turn back is advantageously prevented.

According to another preferred embodiment of the invention, said first element comprises a first through-hole and said second element comprises a second through-hole, wherein said first and second through-holes are preferably located on said longitudinal axis.

Still further preferably, a first diameter of said first through-hole of said first element is smaller than a second diameter of said second through-hole of said second element, wherein the first diameter is fitting with or smaller than a third diameter of a securing screw to be used together with said distance washer.

During mounting the CRT to the supporting frame, the securing screw is introduced in the second through-hole of said second element. The securing screw is smoothly slidable inside the second through-hole, because the third diameter of the securing screw is chosen to be smaller than the second diameter of said second through-hole.

As the first diameter of the first through-hole is the same or smaller than the third diameter of the securing screw, it can not be slided through said first through-hole. Instead, a tip end of the securing screw pushes against a lateral opening of said first through-hole after the securing screw has been introduced into the second through hole. As for consequence, upon turning the securing screw, for example the first element of the distance washer also rotates due to a frictional force between the tip end of the securing screw and the lateral opening of the first through hole. The first element turns rotates until an outer surface thereof is touching the surface of the screw boss or the CRT-ear.

In case the outer surface of the first element has come into contact with the surface of the screw boss or the CRT-ear, a force to further move up the first element is bigger than a force to turn the securing screw through the first through-hole of the first element. Therefore, the securing screw will go into the screw boss or into the CRT-ear, respectively.

In this embodiment of the present invention, the thickness of the distance washer according to the present invention is increased because of a rotation of said first element relative to the second element merely in one direction, wherein a turn-back is prevented by said engaging portion engaging with said receiving portion or by said at least one surface of said first element and said second element being structured like a saw tooth.

In a still further preferable embodiment, said first element and said second element are rotatably clipped together. Therewith, a relative position between said first element and said second element is defined along said longitudinal axis.

Still further preferably, said distance washer is made of plastic. Still further preferably, the distance washer is manufactured by injection molding. This manufacturing technique is inexpensive and has the advantage of a high degree of integration with respect to functional parts of the distance washer which can be directly manufactured in only one process step.

The accompanying drawings which are incorporated in and constitute a part of this specification, illustrate an exemplary preferred embodiment of the invention and, together with a general description of the invention given above, and the detailed description of the embodiment given below, serve to explain the principles of the invention, wherein:
- **Fig. 1a**: illustrates a first element of a distance washer according to the present invention in a perspective view showing a front side thereof;
- **Fig. 1b**: illustrates the first element of Fig. 1a in a perspective view show ing a back side thereof;
- **Fig. 1c**: illustrates the first element of Figs. 1a and 1b in another side perspective view showing the back side thereof;
- **Fig. 2a**: illustrates a second element of the distance washer according to the present invention in a perspective view showing a back side thereof;
- **Fig. 2b**: illustrates the second element of Fig. 2a in another perspective view showing a front side thereof;
- **Fig. 2c**: illustrates the second element of Figs. 2a and 2b in another per spective view showing the front side thereof;
- **Fig. 3a**: illustrates the distance washer according to the present invention in a perspective view from above, wherein the first element is mounted on the second element; and
- **Fig. 3b**: illustrates the distance washer according to the present invention in a perspective view from below, wherein the first element is mounted on the second element.

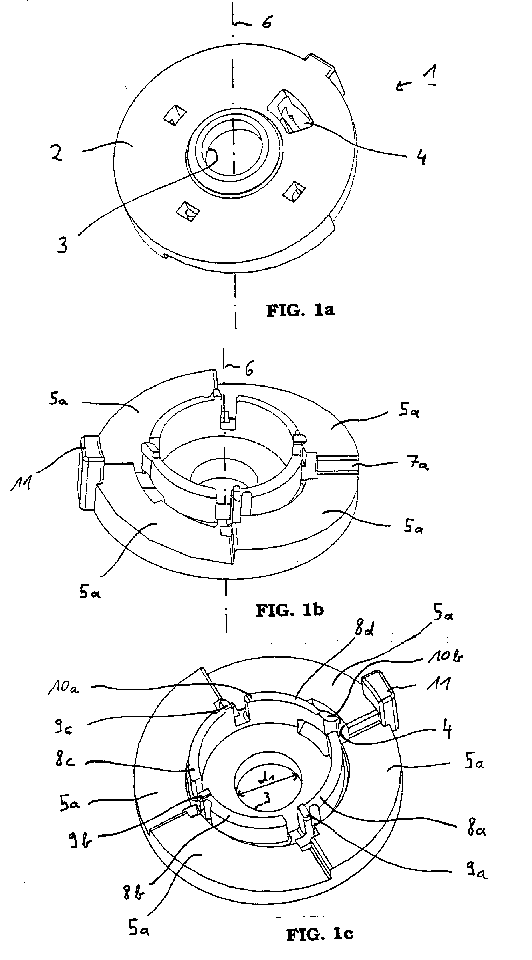

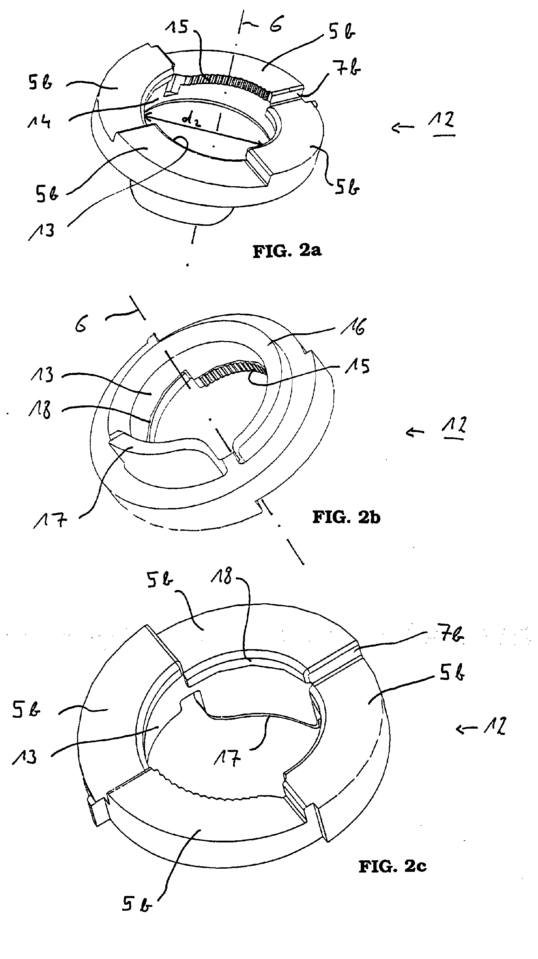

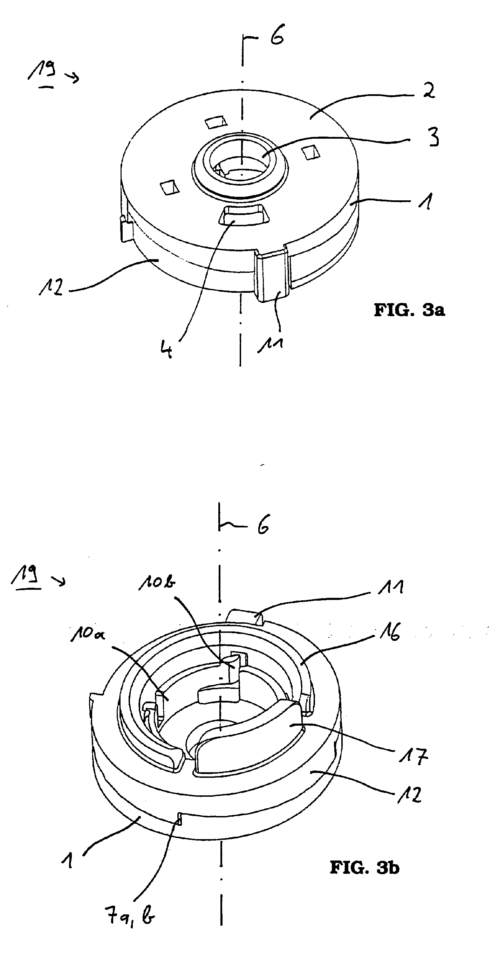

In the following Figs. 1 and 2 are described which illustrate perspective views of a distance washer according to the present invention comprising a first element and a second element, wherein a configuration of the first element and the second element is explained, respectively. Subsequently reference is made to Figs. 3a and 3b which illustrate a perspective view of said distance washer according to the present invention, wherein the first element and the second element are shown in a condition being mounted together so as to explain an interaction therebetween in order to render clear a functioning of the distance washer according to the present invention.

Fig. 1a shows a perspective view of a preferred embodiment of a first element 1 showing a front side thereof. In the following the first element 1 is designated as washer top. The washer top 1 is formed like a circular disk. On its front side the washer top 1 comprises a top surface 2 which is substantially flat. Further a first through hole 3 is arranged in a center portion of said washer top 1 along a longitudinal axis 6 of the washer top 1, wherein said first through hole 3 is also formed in a circular shape. Between the first through hole 3 and an outer circumference of the washer top 1 a recess 4 is provided having a shape of a ring element with respect to a center of said washer top 1. The function of said recess 4 is explained further below.

When a cathode ray tube (CRT, not shown) is mounted on a supporting frame fixed to a cabinet of a TV set (not shown), a fixing member of the CRT, which is referred to as a CRT-ear in the following, is positioned on a surface of a screw boss (not shown) which is attached to the supporting frame. If the distance washer according to the present invention is placed between the screw boss and the CRT-ear, the circular outer shape of the washer top 1 and the substantially flat top surface 2 assure a reduced surface pressure. Nevertheless, it is to be understood that the washer top 1 is not limited to a circular outer shape, but can also be formed in any other shape.

A back side of the washer top 1 is shown in a perspective view in Fig. 1b. On this side the washer top 1 comprises four separate first surfaces 5a which are arranged like circular sections along a circumference of the washer top 1. The first surfaces 5a extend to the center of the washer top 1 wherein a width of each first surface 5a in a radial direction is limited by a protruding wall member, respectively, which is explained further below. Each first surface 5a is inclined with respect to a plane being orthogonal to the longitudinal axis 6. A first separation surface 7a is formed between respective ends of two first surfaces 5a, respectively, wherein each first separation surface 7a is substantially parallel to said longitudinal axis 6.

In accordance with the number of first surfaces 5a the washer top 1 also comprises four first separation surfaces 7a. A height of each first separation surface 7a corresponds to a degree of inclination of each first surface 5a. Of course, it is to be understood that any other number different from four with respect to the first surfaces 5a and the first separation surfaces 7a can be provided on the back side of the washer top 1.

With respect to the back side of the washer top 1 as explained above, the perspective view of Fig. 1b clearly shows that the four inclined first surfaces 5a define a step-like structure along the circumference of the washer top 1, wherein a "starting point" of each step defined by a surface 5 is located on a same height with respect to the longitudinal axis 6. In other words, the configuration of the four first surfaces 5a describes a helix face of the back side of the washer top 1.

As mentioned above, the washer top 1 further comprises four protruding wall members 8a-8d at its back side having a circular shape with respect to the center of the washer top 1, wherein the protruding wall members 8a-8d are adjacent to an inner edge of a first surface 5a, respectively, such as to limit the width thereof in a radial direction. In this embodiment shown in Fig. 1 the four protruding wall members 8a-8d are arranged approximately at a position of half the radius of the circular shape of said washer top 1 so as to describe a circular configuration having a diameter approximately half of an outer diameter of the washer top 1. All protruding wall members 8a-8d extend substantially parallel to the longitudinal axis 6 and all have approximately a same height.

Fig. 1c shows the back side of the washer top 1 in another perspective view. Therein, it can be seen that the protruding wall members 8a, 8b and 8c are integrally formed on the bottom side of the washer top along a whole length of a foot portion thereof, respectively, wherein a wall thickness of the protruding wall members 8a - 8c is such that a minimal elasticity in a radial direction of the washer top 1 is provided therefore.

Each of the protruding wall members 8a-8c is further extended in a direction parallel to the longitudinal axis 6 at one lateral end portion thereof so as to form a first pin 9a-9c, respectively. A head portion of each first pin 9a-9c projects radially to the outside, respectively.

In contrast to the protruding wall members 8a - 8c the protruding wall member 8d is attached to the washer top 1 with only one end portion 10a thereof, wherein a main length of said protruding wall member 8d extends radially within said recess 4 having an appropriate width in a radial direction of the washer top 1. As for consequence, a tip end 10b of the protruding wall member 8d is movable in a radial direction due to an elasticity of the material of the protruding wall member 8d. Said tip end 10b of said protruding wall member 8d serves a engaging member, the function of which will be explained further below.

The perspective view of Fig. 1c further shows that the four protruding wall members 8a-8d are arranged such as to encircle the first though hole 3 which dimension is defined by a first diameter d₁.

A second pin 11 is attached to an outer circumferential edge of the washer top 1 in a position opposite to said engaging portion 10b of the protruding wall member 8d. The second pin 11 extends parallel to said longitudinal axis 6 from the back side of the washer top 1 such that an end of the second pin 11 is flush with a height of said protruding wall member 8d. The function of said second pin 11 will be explained further below.

Fig. 2a illustrates a preferred embodiment of a second element 12 in a perspective view showing a back side thereof. In the following the second element 12 is designated as a washer bottom. In general, the washer bottom 12 is formed like a ring element, wherein an outer diameter corresponds to an outer diameter of the washer top 1. Further, the washer bottom 12 comprises a second through hole 13 defined by a second diameter d₂ which is an inner diameter of said washer bottom 12. The second diameter d₂ corresponds to a diameter defined by the circular configuration of the four protruding wall members 8a - 8d shown in Fig. 1b and Fig. 1c, respectively.

In correspondence with the first surfaces 5a of the washer top 1 shown in Fig. 1, the washer bottom 12 also comprises four second surfaces 5b formed along a circumferential part on the back side of the washer bottom 12. The inclination of the second surfaces 5b of the washer bottom 12 is chosen to be the same as the inclination of the first surfaces 5a of the washer top 1. Similar to the washer top 1, the washer bottom 12 further comprises four second separation surfaces 7b, wherein each second separation surface 7b is formed between respective ends of two second surfaces 5b, respectively. In general the structure of the back side of the washer bottom 12 with regard to the second surfaces 5b is the same as that explained above with reference to the back side of the washer top 1 shown in Figs. 1b and 1c. For this reason a further explanation thereof is omitted.

An inner surface 14 of the second through hole 13 extending parallel to the longitudinal axis 6 is generally smooth. In particular, the inner surface 14 further comprises a receiving portion 15 formed with a saw tooth surface which is arranged along to an inner edge of one of the four second surfaces 5b and which has a radius smaller than the second through hole 13 such that the receiving portion 15 slightly protrudes to a center of the washer bottom 12. The function of the receiving portion 15 is explained further below.

Figs. 2b and 2c illustrate the washer bottom 12 in another perspective view showing a front side thereof. A circular contact surface 16 is provided on the front side of the washer bottom 12, which forms an end portion of the second through hole 13. Further, a circular curved nose 17 is formed along a circumferential portion of the contact surface 16, which extends in a direction parallel to the longitudinal axis 6.

The inner surface 14 of the washer bottom 12 further comprises three jutting portions 18 adjacent to an opening of the second through hole 13 facing the back side of the washer bottom 12, which are radially extended along the inner surface 14 in correspondence with said second surfaces 5b except of said one second surface 5b at which inner edge is arranged said receiving portion 15. Each jutting portion 18 radially protrudes to the center of the washer bottom 12 and comprises a rest surface which is formed opposite to the opening of the second through hole 13 facing the back side of the washer bottom 12, wherein each rest surface is parallel to a second surface 5b corresponding thereto, respectively. In other words, each of the rest surfaces is inclined with respect to a plane orthogonal to said longitudinal axis 6 similar to the corresponding second surfaces 5b, respectively. In the perspective views of Figs. 2b and 2c, a lateral edge of one of the jutting portions 18 can be seen in an inside of the second through hole 13.

Fig. 3a illustrates a perspective view of the distance washer 19 according to the present invention in an assembled state comprising the washer top 1 and the washer bottom 12. In detail, the washer top 1 is mounted on the washer bottom 12, wherein the washer top 1 and the washer bottom 12 are arranged along the longitudinal axis 6 and the respective back sides thereof are in contact with each other, respectively. In particular, the respective first and second surfaces 5a, 5b of each the washer top 1 and the washer bottom 12 are set onto each other, wherein the respective first and second separation surfaces 7a, 7b of each the washer top 1 and the washer bottom 12 are abutted against each other.

When the washer top 1 is set onto the washer bottom 12, radially outer surfaces of the protruding wall members 8a, 8b and 8c come into contact with the inner surface 14 of the second through hole 13, wherein the protruding wall members 8a - 8c are slightly deformed radially to the inside. A length of the pins 9a-9c formed with the protruding wall members 8a-8c, respectively, is such that the head portions thereof grip on the rest surfaces of the jutting portions 18, respectively, after the washer top 1 has completely been brought into contact with the washer bottom 12 as described above. Therewith the washer top 1 and the washer bottom 12 are rotatably clipped together. A jamming of the head portions of the pins 9a-9c sliding on the rest surfaces during rotation of the washer top 1 relative to the washer bottom 12 is prevented by means of an inclination of said rest surfaces as explained above.

Furthermore, during mounting the washer top 1 on the washer bottom 12 the engaging portion 10b of the protruding wall member 8d comes into contact with the receiving portion 15 of the washer bottom 12. A width in a radial direction of a respective second surface 5b of the washer bottom 12, along which the receiving portion 15 is provided and which is to be placed onto a corresponding first surface 5a of the back side of the washer top 1 in between the engaging portion 10b and the second pin 11, is set such that the engaging portion 10b of the protruding wall member 8d is bended radially to the inside within the recess 4 when the back side of the washer top 1 is positioned onto the back side of the washer bottom 12. Due to the elasticity of the protruding wall member 8d the engaging portion 10b tends to move back in a radially outer direction, pushing against the receiving portion 15. Thus a constant pressure contact between the engaging portion 10b and the receiving portion 15 is provided. Further, the second pin 11 attached to the circumferential edge of the washer top 1 is located opposite to the engaging portion 10b such that it can take a force which is exerted from the engaging member 10b on the receiving portion 15 of the washer bottom 12.

In the condition shown in Figs. 3a and 3b the washer top 1 can be rotated relative to the washer bottom 12 wherein the helix face of the respective back sides of both the washer top 1 and the washer bottom 12 leads to a change of thickness of the distance washer 19 according to the present invention with respect to the longitudinal axis 6. From an initial relative position between the washer top 1 and the washer bottom 12 in which the respective first and second separation surfaces 7a, 7b of each the washer top 1 and the washer bottom 12 are abutting against each other, so that a minimum thickness of the distance washer 19 according to the present invention is set, the washer top 1 can be turned relative to the washer bottom 12 merely in one direction so as to increase the thickness of the distance washer 19. In this context, it is to be noted that a turn back of e.g. the washer top 1 is prevented by an engaging contact of the engaging portion 10b with the receiving portion 15. The engaging portion 10b meshes with said receiving portion 15 having an appropriately formed surface such that the thickness of said distance washer 19 according to the present invention is merely increasable by rotating the e.g. the washer top 1 relative to the washer bottom 12 in one direction. This leads to a reliable compensation of a gap between the CRT ear and the screw boss which might be due to a tolerance of the CRT-ear and/or the screw boss. In this embodiment of the present invention, the inclination of the respective first and second surfaces 5a, 5b is set such that the thickness of the distance washer 19 according to the present invention might be increased up to several millimeters upon a 90° turn of the washer top 1 relative to the washer bottom 12.

In the following a possible way of mounting the CRT on the supporting frame is explained. The distance washer 19 according to the present invention is placed between the CRT-ear and the surface of the screw boss (both not shown), wherein the front sides of the washer top 1 and the washer bottom 12 are facing the CRT-ear and the screw boss of the supporting frame, respectively. For example, the nose 17 is inserted in an appropriate recess provided in the supporting frame so as to prevent a turning of the washer bottom 12. A fixing means such as a securing screw is used for mounting the CRT on the supporting frame, wherein a third diameter of the securing screw is smaller than the second diameter d2 of the second through hole 13 and is the same or larger than the first diameter d of the first through hole 3.

Subsequently, the securing screw is inserted through an opening of the CRT-ear (not shown), wherein a tip end of the securing screw pushes against a lateral opening of the first through hole 3. If the securing screw is turned, at first a frictional force acting between the tip end of the securing screw and the lateral opening of the first through hole 3 makes the washer top 1 to rotate relative to the washer bottom 12 which is not turning because the nose 17 is inserted in the supporting frame. As for consequence, the thickness of the distance washer 19 according to the present invention increases, as explained above, until the front surface 2 of the washer top 1 touches the surface of the CRT-ear. When this condition is reached, a force to further rotate the washer top 1 is bigger than a force to turn the securing screw through the first through hole 3 of the washer top 1. As for result, the securing screw is turned through the first through hole 3 of the washer top 1, and further through the second through hole 13 of the washer bottom 12 of which the second diameter d₂ is larger than the third diameter of the securing screw, before it finally enters into the screw boss so as to mount the CRT on the supporting frame.

In case the distance washer 19 according to the present invention is made of a plastic material, a manufacturing thereof is less expensive and provides a high degree of integration by which the washer top 1 and the washer bottom 12, respectively, including the functional elements as explained above can be advantageously produced within a single manufacturing step, e.g. by injection molding.

Further, because of a higher hardness of the securing screw usually made of metal in comparison with the plastic material which may be chosen for the distance washer according to the present invention, it is possible to easily turn the securing screw through the first through hole 3 in the case that the first diameter of the first through hole 3 is smaller than the third diameter of the securing screw, as mentioned above.

By means of the distance washer 19 according to the present invention it is possible to compensate a gap between the CRT-ear and the supporting frame which might be present due to a tolerance of a CRT-ear and/or the screw boss, wherein a bending of the supporting frame can be successfully prevented. This provides a constant distance of a CRT mask from a monitor mask of the TV set. Further preferably a force to tighten the securing means for mounting the CRT on the supporting frame is maintained to a constant value.

It is to be understood that the structure of the distance washer according to the invention is not limited to the embodiment described above with reference to Figs. 1 to 3. Of course, any modification can be made for this embodiment to achieve the same advantageous effects as described above, without departing from the scope of the invention.

By way of example, the back sides of the washer top 1 and the washer bottom 12, respectively, may comprise more or less first and second surfaces 5a, 5b than four, respectively, which are inclined with respect to a plane orthogonal to said longitudinal axis 6. Further, in addition to the provision of the engaging portion 10b and the receiving portion 15, or alternatively, at least one of said inclined first and second surfaces 5a, 5b may be formed with a saw tooth structure by which a turn back of e.g. the washer top 1 relative to the washer bottom 12 can be advantageously prevented.

## Claims

1. Distance washer (19) comprising at least a first element (1) and a second element (12) arranged along a longitudinal axis (6) of said distance washer, wherein a position of said first element (1) relative to said second element (12) along said longitudinal axis (6) is changeable in order to vary a thickness of said distance washer with respect to said longitudinal axis (6).

2. Distance washer (19) according to claim 1, **characterized in that**
an engaging portion (10b) of said first element (1) is engageable with a receiving portion (15) of said second element (12) such that said first element (1) and said second element (12) are merely movable in a direction such that the thickness of said distance washer increases.

3. Distance washer (19) according to claim 3, **characterized in that**
said engaging portion (10b) is formed by a snap fit.

4. Distance washer (19) according to one of claims 1 to 3, **characterized in that**
said first element (1) and/or said second element (12) are rotatably arranged along said longitudinal axis (6), wherein said position of said first element (1) relative to said second element (12) along said longitudinal axis (6) is changeable upon rotation of said first element (1) and/or said second element (12).

5. Distance washer (19) according to claim 4, **characterized in that**
said first element (1) and said second element (12) comprise at least a first surface (5a) and a second surface (5b), respectively, arranged along a circumferential part of said elements, wherein
said at least one of said first and second surfaces (5a; 5b) of said first and second elements (1; 12), respectively, is inclined with respect to a plane being orthognonal to said longitudinal axis (6), and wherein
said first and second surfaces (5a; 5b) of said first and second elements (1; 12), respectively, are in contact with each other.

6. Distance washer (19) according to claim 5, **characterized in that**
said at least one of said first and second surfaces (5a; 5b) is flat.

7. Distance washer (18) according to claim 5, **characterized in that**
said at least one of said first and second surfaces (5a; 5b), respectively, is structured like a saw tooth such that said first element (1) is merely rotatable in one direction relative to said second element (12) in order to increase the thickness of said distance washer.

8. Distance washer (19) according to anyone of the preceding claims, **characterized in that**
said first element (1) and said second element (12) comprise a first through hole (3) and a second through hole (13) along said longitudinal axis (6), respectively, wherein
said first and second through holes (3; 13) are preferably located on said longitudinal axis (6).

9. Distance washer (19) according to claim 8, **characterized in that**
a first diameter (d₁) of said first through hole (3) of said first element (1) is smaller than a second diameter (d₂) of said second through hole (13) of said second element (12), wherein
the first diameter (d₁) is fitting with or smaller than a third diameter of a screw to be used together with said distance washer.

10. Distance washer (19) according to anyone of claims 1 to 9, **characterized in that**
said first element (1) and said second element (12) are rotatably clipped together.

11. Distance washer (19) according to anyone of the preceding claims, **characterized in that**
said distance washer is made of plastic.

12. Distance washer (19) according to anyone of the preceding claims, **characterized in that**
said distance washer is manufactured by injection molding.

13. Distance washer (19) according to any one of the preceding claims, **characterized in that**
said distance washer is used for mounting a cathode ray tube (CRT) on a supporting frame.
